# EUROPEAN PATENT APPLICATION

(11) **EP 1 845 743 A1**
(43) Date of publication of application: **17.10.2007**
(21) Application number: 07105693.1
(22) Date of filing: 05.04.2007
(51) Int. Cl.: H04Q 7/36, H04Q 7/38

(54) **Method for broadcasting multimedia data by controlled synchronization of the broadcasting times of the base stations of an FDMA/TDMA network and use of a common carrier frequency**

(30) Priority: 12.04.2006 FR 0651336
(71) Applicant: Alcatel Lucent, 75008 Paris (FR)
(72) Inventor: Achard, Jacques, 92130, ISSY LES MOULINEAUX (FR); Dartois, Luc, 78955, CARRIERES SOUS POISSY (FR)
(74) Representative: El Manouni, Josiane

(57) **Abstract**

A method is dedicated to broadcasting multimedia data in multimedia sessions set up in an FDMA/TDMA type communication network comprising cells (C1-C3) associated with base stations (BTS1-BTS3) adapted to broadcast the multimedia data to mobile communication terminals (MS). This method consists in, on the one hand, controlled synchronization, relative to a reference clock, of the times of broadcasting identica! multimedia data relating to the same multimedia session in each base station that the multimedia session concerns and, on the other hand, configuration of each of the base stations concerned so that they broadcast the identical multimedia data of the multimedia session during chosen periods by means of at least one chosen common carrier frequency and in at least one common chosen time slot.

## Description

The invention concerns communication networks of FDMA/TDMA (Frequency Division Multiple Access/Time Division Multiple Access) type, and more precisely broadcasting multimedia data to mobile communication terminals by such networks.

Here "communication networks of FDMA/TDMA type" means all mobile or cellular communication networks using frequency division and time division multiplexing, such as networks of GSM/GPRS/EDGE type, for example.

Moreover, "multimedia data" here means any type of data set or content intended to be broadcast at a plurality of sites substantially simultaneously by means of a common multimedia session, for example of MBMS (Multimedia Broadcast and Multicast Service) type. It will be noted that the word multimedia must not be interpreted in a restrictive way, i.e. exclusively as a mixture of media. Consequently it could in particular be a question of file data, voice data, television program data or video data, or any combination of such data.

Furthermore, "mobile communication terminal" here means any mobile (or portable or cellular) mobile communication equipment capable of exchanging multimedia data by radio with another equipment, such as a broadcast server, for example, in the case of an MBMS type service. Consequently, it could for example be a question of a mobile (or cellular) mobile telephone, a communicating personal digital assistant (PDA), a portable computer (or laptop) or a dedicated receiver (for example of MBMS type), installed onboard a vehicle, for example, in particular for receiving television programs or videos.

In some networks of FDMA/TDMA type, and in particular those of GSM/GPRS/EDGE type, multimedia data is broadcast by means of multimedia sessions (for example of MBMS type) for which resources have been allocated. More precisely, in each cell which a multimedia session concerns a certain number of time slots is allocated on one or more carriers. In order to avoid destructive interference between radio signals coming from adjacent cells, the frequencies of the carriers used vary from one cell to another as a function of network planning rules.

Because of the use of frequency clusters (one frequency per cell) in the context of the frequency reuse mechanism, the spectral efficiency of this way of allocating resources is less than the optimum. For example, an operator wishing to broadcast in parallel two MBMS sessions each necessitating four time slots in a GSM network using carriers at 200 kHz and clusters of 21 frequencies must allocate a 200 kHz carrier for this service in each cell, and thus in total a frequency band of 21 × 200 kHz, i.e. 4.2 MHz, to broadcast this service over the whole of its network.

Moreover, in a network of GSM/GPRS/EDGE type certain multimedia data broadcast services, such as mobile television, for example, require high bit rates, of the order of 60 kbps, for each television channel. Now, to give an illustrative example, to be able to achieve these bit rates, it may be necessary to use, for each television channel, four time slots of the eight that GSM frames include. Consequently, to broadcast many television channels a network operator must use many different carrier frequencies, which is not always possible given the low spectral efficiency and the limited band of frequencies allocated to the operator.

An object of the invention is therefore to improve the situation in networks of FDMA/TDMA type, and in particular in those of GSM/GPRS/EDGE type.

To this end the invention proposes a method dedicated to broadcasting multimedia data in multimedia sessions set up in an FDMA/TDMA type communication network comprising cells associated with base stations adapted to broadcast the multimedia data to mobile communication terminals.

This broadcasting method is characterized in that it comprises the steps of:
- controlled synchronization, relative to a reference clock, of the times of broadcasting identical multimedia data relating to the same multimedia session in each base station that the multimedia session concerns,
- configuration of each of the base stations concerned so that they broadcast the identical multimedia data of the multimedia session during chosen (sending) periods by means of at least one chosen common carrier frequency and in at least one common chosen time slot.

Here "controlled synchronization" means either substantially simultaneous synchronization (i.e. simultaneous apart from locking errors) or synchronization by means of constant offsets.

The broadcasting method according to the invention may have other features and in particular, separately or in combination:
- in the presence of a frequency hopping mechanism implemented in the network and consisting in changing the broadcasting frequency of the base stations in accordance with a chosen time chart, each of the base stations concerned may be configured so that they broadcast during each chosen period defined by the time chart the identical multimedia data of the multimedia session in at least one chosen common time slot and by means of at least one chosen common carrier frequency, the common carrier frequency varying during successive periods according to the time chart;
- in the absence of a frequency hopping mechanism, each of the base stations concerned may be configured so that they broadcast the identical multimedia data of the multimedia session continuously in at least one chosen common time slot and by means of at least one chosen common carrier frequency;
- the times of broadcasting of the identical multimedia data relating to the same multimedia session may be synchronized in each base station that the multimedia session concerns so that they broadcast the identical multimedia data of the multimedia session substantially simultaneously (typically to within one microsecond in the case of GPS type synchronization);
- the times of broadcasting of the identical multimedia data relating to the same multimedia session may be synchronized in each base station that the multimedia session concerns so that they broadcast the identical multimedia data of the multimedia session with respective chosen constant offsets relative to reference times;
   ➢ the constant offsets may for example be chosen as a function of the respective environments of the base stations and/or as a function of the types of devices that the mobile communication terminals comprise for combating multipath propagation of signals coming from adjacent base stations;
- each of the base stations concerned may be configured so that they broadcast the identical multimedia data of the multimedia session in each chosen period in a number of (for example two to five) chosen successive common time slots;
   ➢ each of the base stations concerned may be configured so that they broadcast the identical multimedia data of the multimedia session in each chosen period by means of a single carrier frequency common to each of the chosen successive common time slots;
- the multimedia data to be broadcast may be transmitted to the base stations after adding to them a time marker representing the time of broadcasting them, over the radio interface, defined relative to the reference clock;
   ➢ each network element on the path taken by the marked multimedia data to be transmitted may be configured so that the next network element (on the path) transmits the marked multimedia data before the broadcasting time represented by the time marker, increased by a time margin chosen as a function of the position of the network element concerned on the path;
      - in the case of segmentation in a network element situated on the path of the packets containing the marked multimedia data into smaller blocks of data adapted for transport over the radio interface, the network element transmits the blocks to the downstream network elements on the path after associating with them a transmission limit date that must be respected;
- the base stations may for example be synchronized in controlled manner by locking their internal clocks to a reference clock of a satellite radio navigation system.

The invention also relates to a device or system for implementing the method described hereinabove.

The invention is particularly well adapted, although not exclusively so, to multimedia data transmitted in the form of multimedia sessions of MBMS type.

Other features and advantages of the invention will become apparent on reading the following detailed description and examining the appended drawings, in which:
- figure 1 shows very diagrammatically and functionally a portion of a GSM network in which a method according to the invention for broadcasting multimedia data may be used,
- figures 2A and 2B show clusters of three cells and the frequencies used therein, respectively in the case of a prior art network with no frequency hopping and in the case of a network with no frequency hopping implementing the invention,
- figures 3A and 3B show clusters of three cells and the frequencies used therein, respectively in the case of a prior art network with frequency hopping and in the case of a network with frequency hopping implementing the invention,
- figure 4 shows a situation in which a mobile terminal MS is situated at equal distances from a base station associated with a first cell and a base station associated with a second cell of substantially the same size as the first cell, and timing diagrams in which the bottom left-hand portion corresponds to the situation in the case of a prior art network and the bottom right-hand portion corresponds to the situation in the case of a network implementing the invention,
- figure 5 shows a situation in which a mobile terminal MS is situated at the intersection between two sectorized cells each having its own send antenna, and
- figure 6 shows a situation in which a mobile terminal MS is situated at different distances from a base station associated with a first cell and a base station associated with a second cell smaller than the first cell, and timing diagrams of which the bottom left-hand portion corresponds to the situation in the case of a prior art network and the bottom right-hand portion corresponds to the situation in the case of a network implementing the invention.

The appended drawings constitute part of the description of the invention as well as contributing to the definition of the invention, if necessary.

An object of the invention is to optimize the spectral efficiency of the broadcasting of multimedia data in a network of FDMA/TDMA type.

It is considered hereinafter by way of nonlimiting example that the network of FDMA/TDMA type is a network of GSM/GPRS/EDGE type. However, the invention is not limited to that type of network. It concerns in fact all networks of FDMA/TDMA type in which there arises a problem of the spectral efficiency of broadcasting multimedia data.

Moreover, it is considered hereinafter, by way of nonlimiting example, that the multimedia data is broadcast by the network of FDMA/TDMA type to mobile communication terminals in multimedia sessions of MBMS (Multimedia Broadcast and Multicast Service) type. However, the invention is not limited to this type of multimedia session. It concerns in fact all multimedia sessions for broadcasting substantially simultaneously, by radio, to mobile communication terminals, identical multiplexes containing identical sets of multimedia data (or identical contents) of any type, and in particular file data, voice data, television program data, video data or any combination of such data.

Moreover, it is considered hereinafter, by way of nonlimiting example, that the mobile communication terminals are mobile (or cellular) telephones. However, the invention is not limited to that type of terminal. It concerns in fact all mobile (or portable or cellular) communication equipments capable of exchanging multimedia data by radio with another (mobile or non-mobile) equipment. Consequently, it could also be a question either of communicating personal digital assistants (PDA), portable computers (or laptops), or dedicated receivers (for example of MBMS services), that may be installed onboard vehicles, for example, in particular for receiving telephone programs or videos.

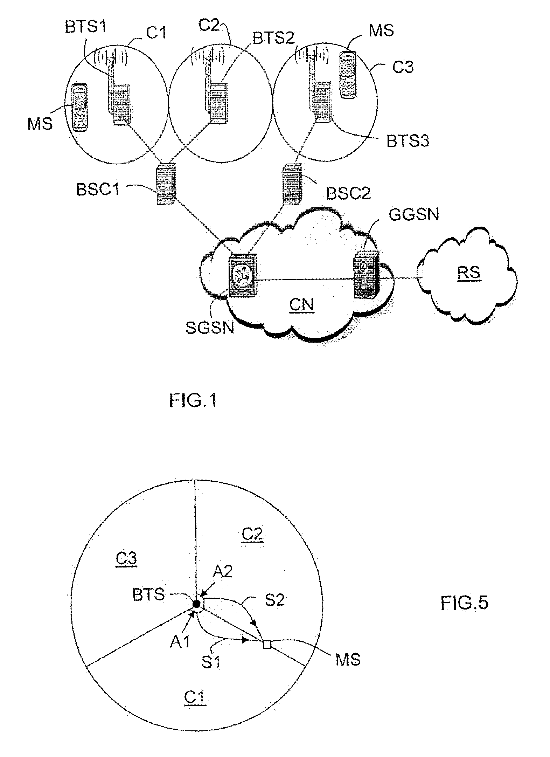

As shown in figure 1, very broadly speaking but nevertheless in sufficient detail for the invention to be understood, a GSM network may be summarized as a core network (CN) coupled to a radio access network (BSS) itself connected to a network management system (NMS), not shown.

The radio access network primarily includes interconnected base stations BTSi and radio network controllers or nodes BSCj.

Each base station BTSi is associated with at least one (logical) cell Ci covering a radio area (or coverage area) in which mobile terminals MS can set up (or continue) radio links, and in particular receive broadcast multimedia data.

In the example shown, only three cells (C1-C3, i = 1 to 3) are represented. However, the index i can take any non-zero value. Moreover, in the example shown, each base station BTSi is associated with only one cell Ci. However, a base station BTSi may be associated with a plurality of cells Ci.

Each radio network controller BSCj is associated with at least one (logical) cell Ci and therefore coupled to at least one base station BTSi. In the example shown, only two radio network controllers (BSC1 and BSC2, j = 1 and 2) are represented. The controller BSC1 is coupled to the base stations BTS1 and BTS2 and the controller BSC2 is coupled to the base station BTS3. However, the index j can take any non-zero value.

The core network CN comprises network equipments, certain of which are connected in particular to the radio network controllers BSCj. Of those equipments there may be cited in particular at least one SGSN node (Serving GPRS Support Node), connected in particular to radio network controllers BSCj, and at least one GGSN node (Gateway GPRS Support Node) connected to the SGSN node for connecting the core network CN to a services network RS (for example of IP type) providing the services made available to the users of the mobile terminals by the operator of the GSM network, and in particular the multimedia data broadcast services.

The multimedia sessions (here of MBMS type) are set up between the services network RS (and more precisely one or more multimedia data servers) and one or more base stations BTSi via the GGSN node, an SGSN node and one or more radio network controllers BSCj.

The invention proposes a method dedicated to the broadcasting of multimedia data by base stations BTSi in such multimedia sessions.

This broadcasting method consists in effecting a combination of at least two operations.

A first operation consists in synchronizing the times of broadcasting identical multimedia data relating to a common multimedia session by all the base stations BTSi that the multimedia session concerns. According to the invention, this synchronization of the broadcasting times is effected in a manner controlled relative to a reference clock.

That reference clock may be that of a satellite radio navigation system (of RNSS or GNSS type), for example. However, it may equally well and more simply be a clock internal to the GSM network.

The controlled synchronization of the base stations BTSi is effected by locking their respective internal clocks to the reference clock in a selected manner, for example.

Here "controlled synchronization" means either synchronization that is substantially simultaneous (i.e. simultaneous apart from locking errors) or synchronization by means of constant offsets.

Simultaneous synchronization consists in locking the clocks of all the base stations BTSi that a multimedia session concerns in substantially exactly the same manner to the reference clock in order that they broadcast substantially simultaneously identical multimedia data of that multimedia session at selected reference times.

Synchronization by constant offsets consists in offsetting the respective clocks of the base stations BTSi that a multimedia session concerns relative to the reference clock with constant and selected offset values, in order for them to broadcast the identical multimedia data of the multimedia session with these respective constant and selected offsets relative to selected reference times.

This second type of synchronization (by constant offsets) is intended to minimize the destructive interference that may occur in a mobile terminal MS if it is situated at the border of two adjacent cells and receives with incompatible time offsets and/or phase shifts two signals containing the same data broadcast by the two base stations BTSi associated with the two adjacent cells, in the same time slots and on at least one common frequency, as will emerge hereinafter in the description of the second operation.

It must be remembered that the mobile terminals MS generally include a device for combating the multipath propagation to which the signals are subjected, usually called an equalizer, able to compensate small time offsets between the different paths to which the same signal is subjected, typically of the order of 1 *µ*s to a few *µ*s, in order to be able to add their energy contributions constructively. Such equalizers may be used for the coherent recombination of MBMS signals coming from at least two adjacent cells, transmitted on the same carrier frequency and in the same time slots.

Because of the different environments (or topological configurations) of the base stations BTSi, their radio ranges may vary from one cell to another. This is the case if a small urban cell adjoins a large rural cell, for example. In this case, a mobile terminal MS situated at the border of the two cells may receive two identical signals coming from the base stations BTSi of those two cells with time offsets much greater than those that its equalizer is capable of compensating.

It is equally possible for a mobile terminal MS to be placed at the intersection of two cells of identical size, at equal distances from corresponding base stations, and to receive from these two cells substantially simultaneously identical signals of opposite phase. In this case, the equalizer of the mobile terminal MS will not be able to reconstitute the signal transmitted by each of the two base stations.

Consequently, by offsetting in a constant and appropriate manner the respective broadcasting times of the base stations BTSi that a multimedia session concerns it is possible to compensate the time differences and/or the opposite phase relationships introduced by the environmental (or topological configuration) differences of these base stations BTSi and/or by the position of a mobile terminal MS relative to said base stations BTSi.

For example, the choice is made to delay the broadcasting times of the base stations BTSi that are associated with cells of small size (for example urban cells) relative to the broadcasting times of the base stations BTSi that are associated with cells of large size (for example rural cells).

It is important to note that instead of or in addition to the above, constant offsets may also be chosen as a function of the respective types of the equalizers of the mobile terminals MS. In fact, it may be envisaged that the equalizers of the mobile terminals MS are capable of compensating some of the reception time differences (in particular those greater than around 1 *µ*s or a few *µ*s) and thus that the constant offsets of the synchronizations of the base stations BTSi are determined as a function of their respective environments and the maximum time difference supported by the equalizers.

The second operation of the method according to the invention (which is combined with the first) consists in configuring each of the base stations BTSi that the same multimedia session concerns in order that they broadcast during selected periods the identical multimedia data of that multimedia session, on the one hand, by means of at least one selected common carrier frequency and, on the other hand, in at least one selected common time slot.

The periods during which the base stations BTSi (that the same multimedia session concerns) are constrained to broadcast identical multimedia data by means of at least one common carrier frequency vary according to whether the network implements a frequency hopping mechanism or not.

In the absence of a frequency hopping mechanism, there is no need to modify the common frequency or frequencies used by base stations BTSi to broadcast identical multimedia data during the same multimedia session. Consequently, each of these base stations BTSi is configured so that they broadcast the identical multimedia data of the multimedia session continuously in at least one selected common time slot and by means of at least one selected common carrier frequency.

In the presence of a frequency hopping mechanism, the network constrains the base stations BTSi to change their broadcast carrier frequency or frequencies in accordance with a selected time chart defining the frequencies to use and the associated periods of use. Consequently, the base stations BTSi are configured to change the common frequency or frequencies used for broadcasting multimedia data of a multimedia session each time that the associated period of use expires. In other words, during each selected period (defined by the time chart) they broadcast the identical multimedia data of the multimedia session in at least one selected common time slot and by means of at least one common carrier frequency associated with the period concerned.

The number of time slots allocated to a multimedia session depends on the required bit rate. It may of course be equal to the total number of time slots in a GSM frame, which is eight. However, it is important to remember that there is no utility in allocating a multimedia session more time slots than a mobile terminals MS can process. At present, the mobile terminals MS can process a maximum of five consecutive time slots. Consequently, it is at present preferable not to assign more than five consecutive time slots to a multimedia session.

For example, for an application of mobile telephone type requiring a bit rate of the order of 60 kbps per television channel (and thus per multimedia session), four consecutive time slots may typically be allocated to each television channel (and thus to the associated multimedia session). However, another number of time slots could be allocated to the same session, for example two or three, in particular for applications other than broadcasting television channels.

In a GSM network according to the invention, the number of time slots necessary for a multimedia session remains exactly the same as that necessary in a prior art GSM network. However, in contrast to what happens in a prior art GSM network, in a GSM network according to the invention all the cells that common multimedia sessions concern may use common frequencies for each of those common multimedia sessions. Consequently, by way of nonlimiting example, it is possible to broadcast very many television channels in parallel, thereby very significantly increasing spectral efficiency.

If at least two time slots are allocated to a multimedia session, it is preferable to use the same carrier frequency for each of the allocated time slots. This is not obligatory, however. It is equally preferable, although not obligatory, for the time slots allocated to the same multimedia session to be consecutive.

Moreover, if at least two multimedia sessions share the time slots of a frame, the same carrier frequency may be used for all those time slots. For example, to broadcast the multimedia data of three television channels in a cell, the first four time slots and the last four time slots of a first GSM frame may be used for the first and second television channels, respectively, with that first GSM frame transmitted on a first carrier frequency, and four time slots of a second GSM frame may be used for the third television channel, with that second GSM frame broadcast on a second carrier frequency.

This is not obligatory, however. Using different carrier frequencies for the time slots allocated to the different multimedia sessions may in fact be envisaged. Generally speaking, the allocation of radio resources for an MBMS session in fact amounts to choosing a carrier frequency (or a series of such carrier frequencies with an associated hopping law in the case of frequency hopping) and a set of one to five time slots on that carrier frequency. If there is a plurality of simultaneous MBMS sessions, they may occupy separate or common allocations according to the bit rate characteristics of the sessions. For television channels, for example, the simplest allocation consists in assigning each channel different resources independent of those allocated to the other channels.

For the base stations that a multimedia session concerns to be able to broadcast identical multimedia data of that multimedia session in a synchronized manner (apart from constant time offsets), they must receive that multimedia data simultaneously. To achieve this the multimedia data servers (of the service network RS) may, for example, add to the multimedia data time markers representing their broadcasting time defined relative to the reference clock. Accordingly, when the radio network controllers or the packet control units (PCU) receive the multimedia data to be broadcast by the base stations to which they are coupled, they analyze the time markers added to the multimedia data and can transmit the latter simultaneously to the base station concerned as a function of the broadcasting times represented by these added time markers. It must be remembered that in a GSM/GPRS/EDGE network a PCU is logically associated with a radio network controller (BSC), responsible for the GPRS/EDGE aspects linked to radio transmission and situated between a base station (BTS) and the SGSN node that is coupled to the radio network controller (BSC) controlling that base station (BTS).

The use of the method according to the invention may necessitate software and/or electronic adaptations of network equipments and possibly of the mobile terminals.

For example, the equalizers of the mobile terminals may be adapted to compensate receive time offsets greater than those compensated at present.

Adaptations may be introduced into the base stations (BTS) from the data broadcast server (for example of MBMS type) up in order to ensure overall (network-wide) synchronization of the sending of data. For example, each packet of multimedia data may have added to it by the broadcast (MBMS) server a time marker representing the time (limit date) at which it must be sent over the radio interface relative to a reference time (for example the GPS time). Moreover, each network element on the path that passes through the broadcast (MBMS) server, the GGSN node, the SGSN node(s), the radio network controllers (BSC) or PCUs and the base stations (BTS) must be adapted so that the multimedia data is sent to the next node along the path before the limit date represented by the time marker, with a time margin proportional to the distance of the upstream network elements in the chain (to leave a little time for the downstream elements). Moreover, at the end of the path, the base stations (BTS) synchronized in a controlled manner must send the multimedia data at the precise time represented by the time marker contained in the corresponding packet.

The segmentation operations that occur along the path must also be taken into account. In fact, the initial packet is transmitted by the broadcast server in the form of an IP datagram, for example, and at a certain point downstream, at the latest at the level of a PCU or a base station (BTS), that IP datagram will be segmented into smaller data blocks, adapted to transport over the radio interface. The network element that effects this segmentation must then transmit the blocks to the downstream network elements with each block associated with a sending limit date that must be respected by the downstream elements.

Moreover, it is important to ensure at the physical layer level of each base station that the datagrams and the segmentation thereof correspond to predictive automata so that it is possible to guarantee the chronology and the time of sending over the radio interface of the same contributions (or blocks) of each datagram from adjacent sites (or adjacent base stations), ignoring any constant (fixed) programmed offsets of the controlled synchronization of the base stations.

The invention also relates to a device or system for implementing the method described hereinabove. More precisely, that device or system comprises all the equipments or all the equipment portions that must be adapted in accordance with the foregoing description to implement the method according to the invention.

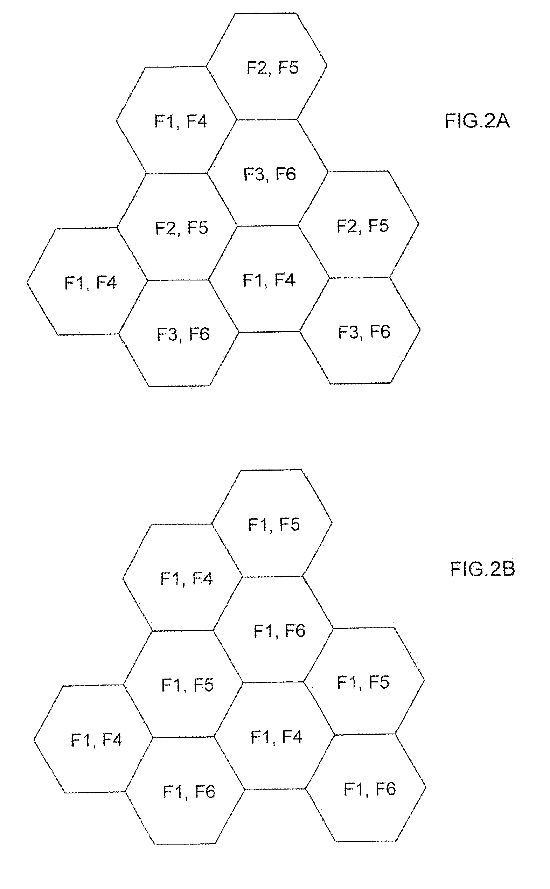

As explained hereinafter by means of representative examples and with reference to figures 2 to 6, the invention significantly increases the spectral efficiency of the broadcasting of multimedia data, typically by a factor from around 3 to a factor of around 20, according to network planning constraints and scenarios.

Refer now to figures 2A and 2B for an illustration of the benefit conferred by the invention in the case of a network with no frequency hopping. More precisely, figure 2A shows some of the cells of a prior art network while figure 2B shows some of the cells of a network implementing the invention.

It is assumed here that in each cell there are two transceivers (TRXs), the first being used entirely for broadcasting multimedia data, while the second is used for "standard" GSM traffic (GSM circuit or GPRS/EDGE point to point). For reasons of simplification, it is considered here that the coverage area of the network is divided into clusters of three cells, which means that the invention can improve only the spectral efficiency for the broadcasting of the multimedia data by only a factor of three. However, the spectral efficiency improvement achieved by the invention is proportional to the number of cells in a cluster.

This multiplication of the spectral efficiency by three in the example of figures 2A and 2B results from the fact that three frequencies F1, F2 and F3 are necessary for broadcasting the multimedia data in the case of the prior art network (figure 2A), whereas a single frequency F1 common to all the cells is sufficient for broadcasting the same multimedia data in the case of the network implementing the invention (figure 2B).

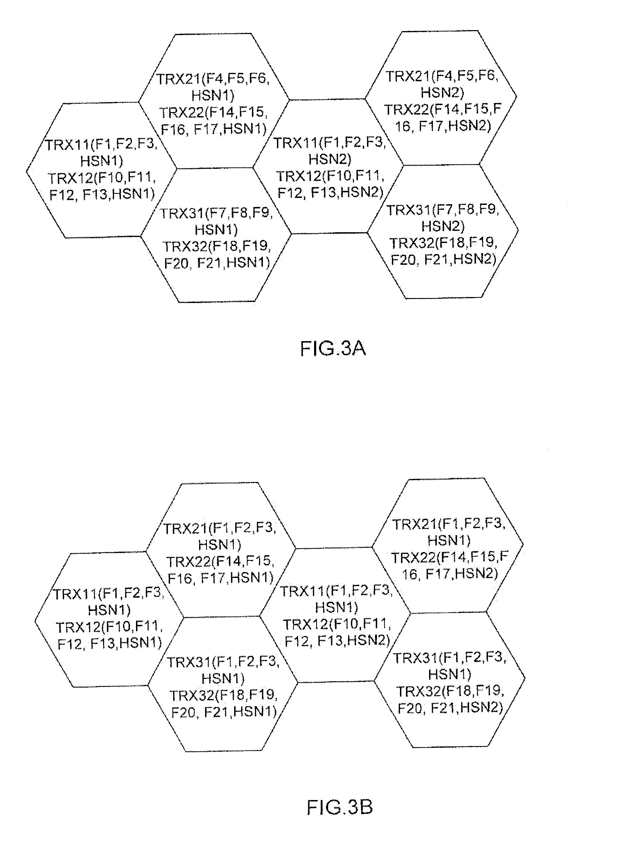

Refer now to figures 3A and 3B for an illustration of the benefit conferred by the invention in the case of a network with frequency hopping. More precisely, figure 3A shows some of the cells of a prior art network while figure 3B shows some of the cells of a network implementing the invention.

It is assumed here that there are two transceivers (TRXij, with i = 1 to 3 and j = 1 and 2) in each cell, the first (Tri1) being used entirely for broadcasting multimedia data and hopping between three frequencies, by way of purely illustrative example, while the second (TRi2) is used for "standard" GSM traffic (GSM circuit or GPRS/EDGE point to point) and hops between four frequencies, by way of purely illustrative example.

For reasons of simplification, it is considered here that the coverage area of the network is divided into clusters of three cells, but the principle remains valid regardless of the number of cells in the cluster.

Moreover, to facilitate the explanation, the GSM terminology has been adopted; thus HSN stands for "Hopping Sequence Number" and designates a type of hopping law. The principles of frequency hopping in a GSM network are described, for example, in the technical specifications TS 45.002 of the 3GPP. Moreover, for reasons of simplification of the figure and the explanation, the BCCH carrier is not shown in figures 3A and 3B.

As may be seen in figure 3B, the invention enables the same frequencies (F1, F2, F3) to be used, but one after the other, and the same hopping law (HSN1) to be used for broadcasting multimedia data in all the cells of the network, whereas in the prior art network three times three frequencies (F1 or F4 or F7), (F2 or F5 or F8) and (F3 or F6 or F9) are necessary to achieve the same result. Consequently, in a network implementing the invention, at a given time, the multimedia data is sent on the same common frequency (F1 or F2 or F3) in all the cells of the network, which frequency changes over time in accordance with the timing of the hopping law. Once again, the spectral efficiency improvement for broadcasting multimedia data corresponds to the size of the cluster of cells, which here means a factor of three.

In the examples described hereinabove with reference to figures 2 and 3 it was assumed that a single transmitter TRX was used to broadcast multimedia data in a cell or a sector. However, this assumption results from the wish to simplify the explanation and is not in any way necessary. It is in fact possible to use only some (preferably contiguous) time slots of a given transmitter (TRX) for this broadcasting and the GSM standard enables association of a set of frequencies and a hopping law for those time slots only. The invention remains applicable, of course, in the case where, in each cell or sector, a plurality of transmitters (TRXs) is associated with the broadcasting of multimedia data.

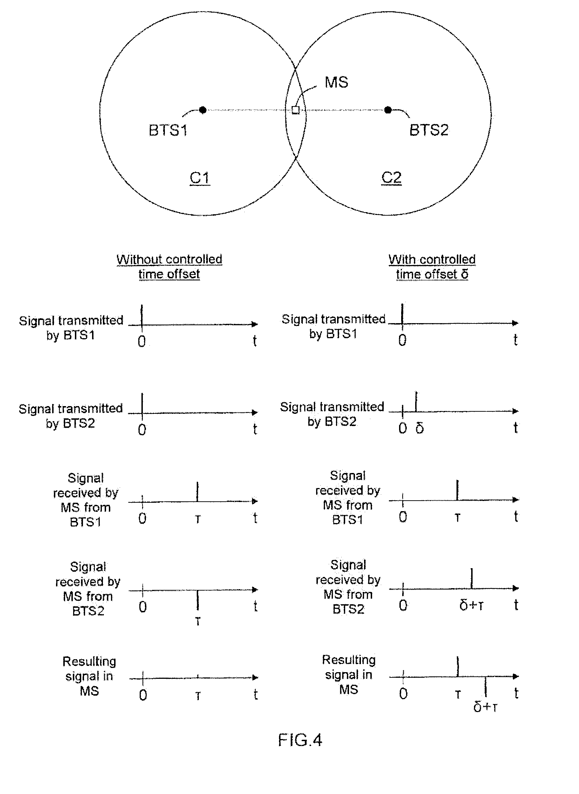

Refer first to figure 4 for an illustration of the benefit conferred by the invention in the case of two cells C1 and C2 of substantially identical size. Here, a mobile terminal MS is situated at equal distances from a base station BTS1 associated with the cell C1 and a base station BTS2 associated with the cell C2. For reasons of simplification, it is considered here, on the one hand, that the signal received by the mobile terminal MS from the base station BTS1 has not suffered multipath propagation, or in other words that there is direct line of sight propagation without reflection or refraction, and, on the other hand, that the signal received by the mobile terminal MS from the base station BTS2 has not suffered multipath propagation either.

Moreover, to simplify the explanation, what is of interest here is the sampled impulse response of the transmission channel between the base station BTS1 and the mobile terminal MS and between the base station BTS2 and the mobile terminal MS. It must be remembered that the concept of the sampled impulse response of a transmission channel is well known to the person skilled in the art. In other words, it is assumed that the base station BTS1 sends a pulse at the time origin (t=0) (in practice this is a simplification given that the base stations send information bits or symbols that are modulated onto a carrier). This pulse is received after attenuation but without distortion (in the absence of multipath propagation) by the mobile terminal MS at a later time T. If the base station BTS2 sends the same pulse at the same time as the base station BTS1 (i.e. at the time origin (t=0), in the case where there is no time offset between the two base stations), then that pulse is also received after attenuation but without distortion at the later time T by the mobile terminal MS.

The local oscillators of the transmitters of the two base stations BTS1 and BTS2, which are used to produce the modulated carrier, not being synchronized, and because there may be small "path differences" (in the optical sense) between the BTS1-MS and BTS2-MS paths, the two signals received by the mobile terminal MS from the base stations BTS1 and BTS2 may have opposite phases. As they are also of the same amplitude, they cancel out in the receiver of the mobile terminal MS, and so the equalizer of the latter is not able to reconstitute the original pulse.

If a controlled time offset δ is now introduced, in accordance with the invention, between the transmissions from the two base stations BTS1 and BTS2, as shown in the lower right-hand portion of figure 4, the two pulses will be received at different times by the mobile terminal MS and therefore cannot cancel out whatever their phases. The equalizer of the mobile terminal MS is then able to reconstitute the initial pulse by combining the two pulses received.

In practice, the presence of multiple paths means that strict cancellation of the signal coming from one of the two base stations BTS1, and BTS2 by the signal coming from the other base station is highly improbable, but there may nevertheless be considerable attenuation of the signal that the principle of controlled time offset in accordance with the invention can prevent.

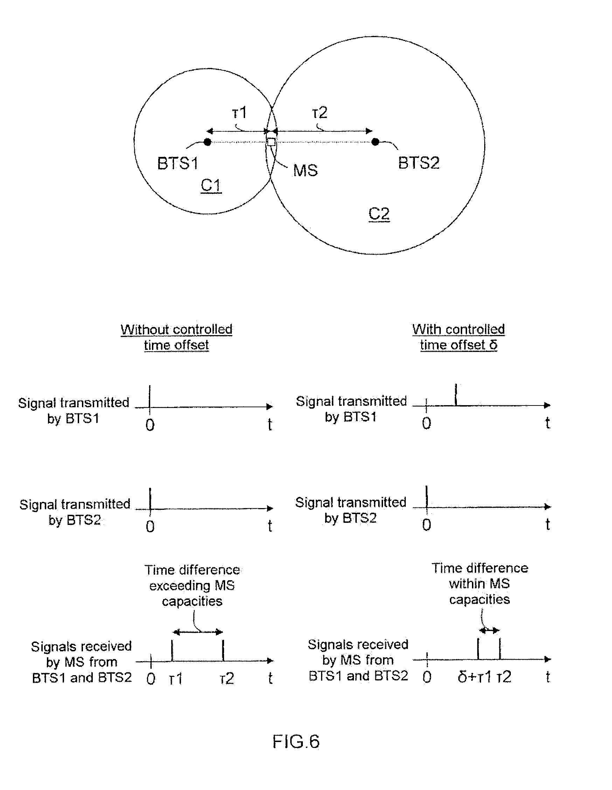

Refer now to figure 5 for an illustration of the benefit conferred by the invention in the case of a mobile terminal MS situated at substantially equal distances from two transmitters A1 and A2 associated with different sectorized cells C1 and C2 (or sectors) belonging to the same base station BTS (which may also comprise at least one other transmitter A3 associated with another sector C3).

The downlink used for broadcasting multimedia data between the base station BTS and the mobile terminal MS is provided by a different transmit antenna Ai (here i = 1 to 3) for each sector (Ai). If the mobile terminal MS is at the boundary between two adjacent sectors (as shown), it is at substantially equal distances from the transmit antennas A1 and A2 of the two sectors C1 and C2, and the conditions of propagation between those antennas A1 and A2 and the mobile terminal MS are very similar. The situation is therefore similar to that described hereinabove with reference to figure 4, and the controlled time offset prevents cancellation of the signal received by the mobile terminal MS. In figure 5, the references S1 and S2 respectively represent the signal transmitted by the antenna A1 and received by the mobile terminal MS and the signal transmitted by the antenna A2 and received by the mobile terminal MS. They are represented by curved lines so that they can be distinguished from each other.

Refer now to figure 6 for an illustration of the benefit conferred by the invention in the case of two cells C1 and C2 of different sizes. Here a mobile terminal MS is situated in the vicinity of the periphery of the two cells C1 and C2, so that there is a very great difference between the distances between the mobile terminal MS and the base station BTS1 associated with the cell C1, on the one hand, and the base station BTS2 associated with the cell C2, on the other hand.

In this case, if no time offset is applied between the two base stations BTS1 and BTS2, the signals received by the mobile terminal MS from the two base stations BTS1 and BTS2 may have a time offset exceeding the combination capacities of its equalizer (as shown in the bottom left-hand portion of figure 6). The receiver of the mobile terminal MS will therefore lock onto one of the two received signals, the other received signal representing interference that it will not be possible to eliminate.

If a controlled time offset in accordance with the invention is now introduced (as shown in the lower right-hand portion of figure 6), the time difference between the reception of the two signals in the receiver of the mobile terminal MS may be reduced to enable its equalizer to combine the two signals.

The invention is not limited to the multimedia data broadcasting method embodiments described hereinabove by way of example only, and encompasses all variants that the person skilled in the art might envisage within the scope of the following claims.

## Claims

1. Method for broadcasting multimedia data in multimedia sessions set up in an FDMA/TDMA type communication network comprising cells (Ci) associated with base stations (BTSi) adapted to broadcast said multimedia data to mobile communication terminals (MS), **characterized in that** it comprises the steps of:
i) controlled synchronization, relative to a reference clock, of the times of broadcasting identical multimedia data relating to the same multimedia session in each base station (BTSi) that said multimedia session concerns,
ii) configuration of each of said base stations (BTSi) concerned so that they broadcast said identical multimedia data of said multimedia session during chosen periods by means of at least one chosen common carrier frequency and in at least one common chosen time slot.

2. Method according to claim 1, **characterized in that** in the presence of a frequency hopping mechanism implemented in said network and consisting in changing the broadcasting frequency of said base stations (BTSi) in accordance with a chosen time chart, each of said base stations (BTSi) concerned is configured so that they broadcast during each chosen period defined by said time chart said identical multimedia data of said multimedia session in at least one chosen common time slot and by means of at least one chosen common carrier frequency, said common carrier frequency varying during successive periods according to said time chart.

3. Method according to claim 1, **characterized in that**, in the absence of a frequency hopping mechanism, each of said base stations (BTSi) concerned is configured so that they broadcast said identical multimedia data of said multimedia session continuously in at least one chosen common time slot and by means of at least one chosen common carrier frequency.

4. Method according to any one of claims 1 to 3, **characterized in that** the times of broadcasting of the identical multimedia data relating to the same multimedia session are synchronized in each base station (BTSi) that said multimedia session concerns so that they broadcast said identical multimedia data of said multimedia session substantially simultaneously.

5. Method according to any one of claims 1 to 3, **characterized in that** the times of broadcasting of the identical multimedia data relating to the same multimedia session are synchronized in each base station (BTSi) that said multimedia session concerns so that they broadcast said identical multimedia data of said multimedia session with respective chosen constant offsets relative to reference times.

6. Method according to claim 5, **characterized in that** said constant offsets are chosen as a function of the respective environments of said base stations (BTSi) and/or as a function of the types of devices that said mobile communication terminals (MS) comprise for combating multipath propagation between signals coming from adjacent base stations.

7. Method according to any one of claims 1 to 6, **characterized in that** each of said base stations (BTSi) concerned is configured so that they broadcast said identical multimedia data of said multimedia session in each chosen period in a number of chosen successive common time slots.

8. Method according to claim 7, **characterized in that** said number of successive slots is from two to five.

9. Method according to either of claims 7 and 8, **characterized in that** each of said base stations (BTSi) concerned is configured so that they broadcast said identical multimedia data of said multimedia session in each chosen period by means of a single carrier frequency common to each of said chosen successive common time slots.

10. Method according to any one of claims 1 to 9, **characterized in that** said multimedia data to be broadcast is transmitted to said base stations (BTSi) after adding to them a time marker representing the time of broadcasting them, over the radio interface, defined relative to said reference clock.

11. Method according to claim 10, **characterized in that** each network element on the path taken by said marked multimedia data to be transmitted so that the next network element on said path transmits said marked multimedia data before said broadcasting time represented by said time marker, increased by a time margin chosen as a function of the position of said network element concerned on said path.

12. Method according to claim 10, **characterized in that** in the case of segmentation in a network element of said path of the packets containing said marked multimedia data into smaller blocks of data adapted for transport over the radio interface, said network element transmits said blocks to the downstream network elements on said path after associating with them a transmission limit date that must be respected.

13. Method according to any one of claims 1 to 12, **characterized in that** said base stations (BTSi) are synchronized in controlled manner by locking their internal clocks to a reference clock of a satellite radio navigation system.
